# EUROPÄISCHE PATENTSCHRIFT

(11) **EP 2 843 348 B1**
(45) Veröffentlichungstag und Bekanntmachung des Hinweises auf die Patenterteilung: **04.05.2016**
(21) Anmeldenummer: 13004272.4
(22) Anmeldetag: 29.08.2013
(51) Int. Cl.: F28F 9/26, F28F 13/00, F28D 9/00

(54) **Plattenwärmeaustauscher mit durch Metallschaum verbundenen Wärmetauscherblöcken**
Plate heat exchanger with heat exchanger blocks connected by metal foam
Échangeur de chaleur à plaques doté de blocs d'échangeur de chaleur reliés par une mousse métallique

(43) Veröffentlichungstag der Anmeldung: 04.03.2015
(73) Patentinhaber: Linde Aktiengesellschaft, 80331 München (DE)
(72) Erfinder: Dietrich, Jörg, 83533 Erding (DE); Hölzl, Reinhold, 82538 Geretsried (DE)
(74) Vertreter: Meilinger, Claudia Sabine

(56) Entgegenhaltungen:
- EP-A1- 1 452 817
- EP-A1- 1 830 149
- WO-A1-02/42707
- WO-A1-2007/050013
- FR-A1- 2 880 106
- US-A1- 2008 149 318

## Beschreibung

Die Erfindung betrifft einen Plattenwärmetauscher mit zumindest zwei Wärmetauscherblöcken, wobei jeder Wärmetauscherblock mehrere parallel zueinander angeordnete Bleche aufweist, die eine Vielzahl von Wärmeaustauschpassagen für am Wärmetausch beteiligte Fluide bilden, wobei die Wärmetauscherblöcke über Verbindungsmittel miteinander verbunden sind und zumindest einen gemeinsamen Header zum Verteilen eines wärmeaustauschenden Fluids auf beide Wärmetauscherblöcke oder zum Abführen eines wärmeaustauschenden Fluids aus beiden Wärmetauscherblöcken aufweisen.

Hartgelötete Plattenwärmetauscher aus Aluminium werden in zahlreichen Anlagen bei verschiedensten Drücken und Temperaturen eingesetzt. Sie finden beispielsweise Anwendung bei der Zerlegung von Luft, der Verflüssigung von Erdgas oder in Anlagen zur Herstellung von Ethylen.

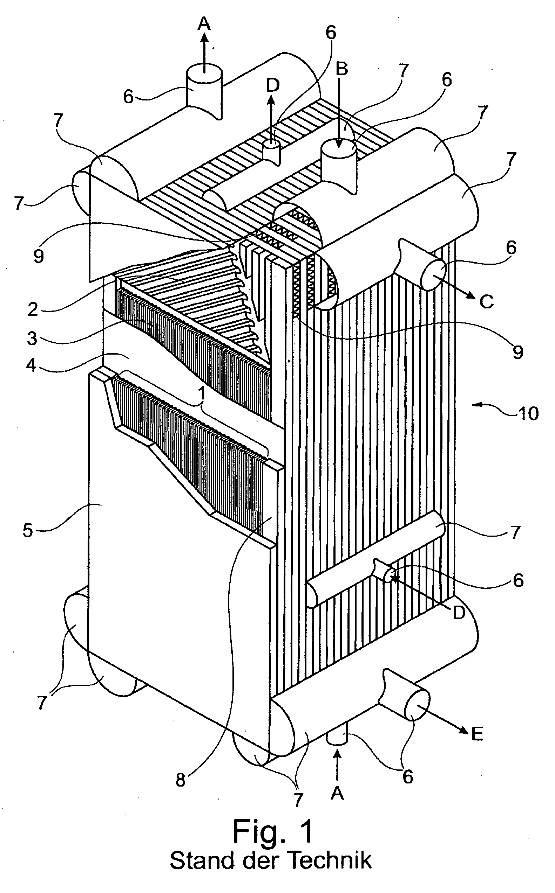

Ein derartiger Plattenwärmetauscher wird beispielsweise in der EP 1452817 oder in "The standards of the brazed aluminium plate-fin heat exchanger manufactures association" ALPEMA, Third Edition, 2010 auf Seite 5 gezeigt und beschrieben. Eine daraus entnommene Abbildung ist in der Fig. 1 als Stand der Technik dargestellt und wird im Folgenden beschrieben.

Der dort gezeigte Plattenwärmetauscher umfasst mehrere parallel zueinander angeordnete Trennbleche 4, die eine Vielzahl von Wärmeaustauschpassagen 1 für die miteinander in Wärmeaustausch zu bringenden Medien bilden. Die Wärmeaustauschpassagen 1 sind durch bündig am Rand der Trennbleche 4 angebrachte Blechstreifen 8, im Weiteren auch als Sidebars 8 bezeichnet, nach außen abgeschlossen. Innerhalb der Wärmeaustauschpassagen 1 sind gewellte Bleche 3, sogenannte Fins 3, angeordnet. Die Trennbleche 4, Fins 3 und Sidebars 8 sind fest miteinander verbunden und bilden somit einen kompakten Wärmetauscherblock 10. Der gesamte Wärmetauscherblock 10 ist durch Deckbleche 5 nach außen begrenzt.

Zur Zu- und Abführung der wärmeaustauschenden Medien sind über Eintritts- und Austrittsöffnungen 9 der Wärmeaustauschpassagen 1 halbzylinderförmige Sammler 7 mit Stutzen 6 angebracht, die zum Anschluss von zu- und abführenden Rohrleitungen dienen. Die Sammler 7 werden im Folgenden auch als Header 7 bezeichnet. Die Ein- und Austrittsöffnungen 9 der Wärmeaustauscherpassagen 1 sind durch sogenannte Verteilerlamellen bzw. Verteilerfins 2 gebildet, die für eine gleichmäßige Verteilung der Medien innerhalb der einzelnen Wärmeaustauschpassagen 1 sorgen. Die Medien strömen in den durch die Fins 3 und die Trennbleche 4 gebildeten Kanälen durch die Wärmeaustauschpassagen 1.

Die Fins 3 sind an ihren Kontaktstellen mit den Trennblechen 4 verlötet, wodurch ein intensiver Wärmeleitkontakt zwischen den Fins 3 und den Trennblechen 4 hergestellt ist. Dadurch wird der Wärmeaustausch zwischen den verschiedenen Medien verbessert, die alternierend in benachbarten Wärmeaustauschpassagen 1 strömen.

Derartige Plattenwärmetauscher sind vorzugsweise aus Aluminium gebildet, wobei die Bauteile durch Hartlöten miteinander verbunden werden. Die mit Lot versehenen Fins, Trennbleche, Verteilerfins, Deckbleche und Sidebars werden aufeinander gestapelt und anschließend in einem Ofen zu einem Wärmetauscherblock hartgelötet. Auf den Wärmetauscherblock werden anschließend die Header mit Stutzen aufgeschweißt.

Durch das eben beschriebene Herstellungsverfahren wird durch die Größe und Geometrie des Lötofens auch die maximale Größe eines derartigen Wärmetauscherblocks vorgegeben. Oft verlangen jedoch Prozesse eine größere Wärmeaustauschfläche und somit größere Wärmetauscherblöcke als in einem derartigen Ofen gefertigt werden können. Um diesen Anforderungen gerecht zu werden, wird auf Seite 6 unter 1.2.3 der vorgenannten Veröffentlichung vorschlagen, zwei oder mehrere Wärmetauscherblöcke durch Schweißen miteinander zu verbinden, um damit einen zusammengesetzten Wärmetauscherblock mit erhöhter Stapelhöhe zu erhalten.

Um einen Plattenwärmetauscher mit mehreren Wärmetauscherblöcken herzustellen, werden zunächst zwei oder mehrere Wärmetauscherblöcke separat voneinander aus Trennblechen, Fins und Verteilerfins wie oben beschrieben in einem Lötofen gefertigt. Diese weisen noch keine Header auf. Auf das Deckblech eines ersten Wärmetauscherblocks werden entlang der Kanten des Deckbleches Leisten aufgeschweißt, die bündig mit den Kanten des Deckblechs abschließen. Diese häufig auch als Sidebars bezeichneten Leisten bilden somit quasi einen Rahmen auf dem Deckblech. Ein zweiter Wärmetauscherblock, der mit dem ersten Wärmetauschblock verbunden werden soll, wird mit seinem Deckblech auf die Leisten des ersten Wärmetauscherblocks aufgelegt und mit diesen verschweißt. Die Anordnung aus beiden verbundenen Wärmetauscherblöcken weist eine größere Stapelhöhe auf als die einzelnen Wärmetauscherblöcke, welche damit die Größe und Geometrie des Lötofens übersteigt. Auf diese Weise können beliebig viele Wärmetauscherblöcke miteinander zu einer beliebig großen Wärmetauscherblockanordnung verbunden werden. Anschließend wird die entstandene Wärmetauscherblockanordnung mit Headern und Stutzen versehen, um einen großen Plattenwärmeaustauscher zu erhalten, der mehrere miteinander verbundene Wärmetauscherblöcke umfasst.

Zwischen den Deckblechen zweier benachbarter Wärmetauscherblöcke eines derartigen Plattenwärmetauschers befindet sich ein von den Sidebars umgebener Hohlraum, der mit Luft gefüllt ist. Dieser Hohlraum wird nicht von einem der am Wärmetausch beteiligten Medien durchströmt. Er ist nicht mit Druck beaufschlagt.

In verschiedensten Anwendungen treten bei derartigen Plattenwärmetauschern aus mehreren Wärmetauscherblöcken hohe Spannungskonzentrationen im Übergangsbereich der Wärmetauscherblöcke auf.

Der vorliegenden Erfindung liegt die Aufgabe zugrunde, einen Plattenwärmetauscher umfassend mehrere Wärmetauscherblöcke und ein Verfahren zu dessen Herstellung bereitzustellen, wobei der Plattenwärmetauscher eine möglichst große mechanische Festigkeit aufweist und Spannungen im Übergangsbereich der Wärmetauscherblöcke reduziert sind.

Die gestellte Aufgabe wird durch einen Plattenwärmetauscher mit den Merkmalen des unabhängigen Anspruchs 1 gelöst. Verfahrensseitig wird die gestellte Aufgabe durch Verfahren wie in Anspruch 7 und 10 beschrieben gelöst.

Demnach wird ein Plattenwärmetauscher mit zumindest zwei Wärmetauscherblöcken bereitgestellt, wobei jeder Wärmetauscherblock mehrere parallel zueinander angeordnete Bleche aufweist, die eine Vielzahl von Wärmeaustauschpassagen für am Wärmetausch beteiligte Fluide bilden, wobei die Wärmetauscherblöcke über Verbindungsmittel - wie beispielsweise die vorgenannten randbündigen Leisten - verbunden sind und zumindest einen gemeinsamen Header zum Verteilen eines wärmeaustauschenden Fluids auf beide Wärmetauscherblöcke oder zum Abführen eines wärmeaustauschenden Fluids aus beiden Wärmetauscherblöcken aufweisen. Erfindungsgemäß befindet sich in einem zwischen gegenüberliegenden Außenflächen vorhandenem Zwischenraum benachbarter Wärmetauscherblöcke Metallschaum, der die Außenflächen miteinander verbindet. Dies bedeutet, dass der vormals luftgefüllte Hohlraum zwischen den Deckblechen der Wärmetauscherblöcke nun vorzugsweise vollständig mit Metallschaum versehen ist.

Die erfindungsgemäße Verbindung der Außenflächen der Wärmetauscherblöcke über einen Metallschaum gewährleistet eine deutlich flächigere Verbindung als es im Stand der Technik der Fall ist. Die Außenflächen der Wärmetauscherblöcke, die in der Regel durch die Deckbleche der Wärmetauscherblöcke gebildet sind, sind durch den Metallschaum stoffschlüssig und damit wärmeleitend verbunden. Durch die Wärmeleitung ist ein Ausgleich von Temperaturunterschieden zwischen den benachbarten Wärmetauscherblöcken möglich, wodurch temperaturinduzierte Spannungen zwischen den Wärmetauscherblöcken im Verbindungsbereich der Wärmetauscherblöcke reduziert sind. Über die Metallschaumeinlage zwischen den Wärmetauscherblöcken wird eine kraftschlüssige Verbindung bis ins Zentrum der gegenüberliegenden Außenflächen geschaffen, wodurch die mechanische Festigkeit der Wärmetauscherblockverbindung verbessert wird. Hierdurch wird die Betriebssicherheit und Ausfallsicherheit bzw. die Lebensdauer des Plattenwärmetauschers deutlich erhöht.

Bei einem Plattenwärmetauscher aus mehreren Wärmetauscherblöcken nach dem Stand der Technik sind hingegen die gegenüberliegenden Außenflächen zweier benachbarter Wärmetauscherblöcke nur an den jeweiligen Kanten der Außenflächen über die randbündigen Leisten miteinander verbunden. Damit weist ein Plattenwärmetauscher nach dem Stand der Technik keine Verbindungen im Zentrum der gegenüberliegenden Außenflächen auf. Entsprechend ist der thermische Kontakt zwischen zwei Wärmetauscherblöcken aufgrund des luftgefüllten Hohlraumes deutlich schlechter als der thermische Kontakt zwischen den Wärmeaustauschpassagen innerhalb eines Wärmeaustauschblocks. Hierdurch treten an der Außenrandschweißnaht an einzelnen lokalen Stellen temperaturinduzierte Klemmspannungen auf. Dies kann in verschiedensten Anwendungen zu hohen thermischen Spannungen innerhalb des Plattenwärmetauschers am Übergang der Wärmetauscherblöcke führen. Mit der erfindungsgemäßen Metallschaumeinlage wird dies verhindert.

Vorzugsweise ist der Metallschaum aus Aluminium oder einer Aluminiumlegierung gebildet.

In einer bevorzugten Ausführungsform füllt der Metallschaum den Zwischenraum zwischen den gegenüberliegenden Außenflächen der Wärmetauscherblöcke in etwa vollständig aus. Damit besteht über die gesamten Außenflächen der Wärmetauscherblöcke wärmeleitender Kontakt, wodurch ein Temperaturausgleich zwischen den Wärmetauscherblöcken optimal stattfinden kann. Es besteht jedoch auch die Möglichkeit nur Teilbereiche des Zwischenraumes mit Schaum zu füllen. Vorzugsweise reicht der Metallschaum jedoch bis in das Zentrum der gegenüberliegenden Außenflächen der Wärmetauscherblöcke.

Vorzugsweise ist das Verbindungsmittel, das die Wärmetauscherblöcke miteinander verbindet, durch Leisten gebildet, die jeweils auf die gegenüberliegenden Außenflächen der benachbarten Wärmetauscherblöcke, vorzugsweise durch Schweißen, aufgebracht sind. Die Leisten schließen vorzugsweise bündig mit den Außenkanten der gegenüberliegenden Außenflächen der Wärmetauscherblöcke ab. Vorteilhafterweise sind die Leisten über eine durchgehende Schweißnaht mit Deckblechen der Wärmetauschermodule verschweißt. Die Leisten können einen umlaufenden Rahmen auf den Außenflächen der Wärmetauscherblöcke bilden. Während der Fertigung des Plattenwärmetauschers sollte zum Einbringen des Metallschaums zunächst zumindest eine Öffnung zum Zwischenraum zwischen den gegenüberliegenden Außenflächen frei bleiben.

Der erfindungsgemäße Plattenwärmetauscher weist in den Wärmeaustauschpassagen der Wärmetaustauscherblöcke vorzugsweise Mittel zur Unterteilung der Wärmeaustauschpassagen in eine Vielzahl von Kanälen auf. Vorzugsweise sind dies gewellte Bleche, die verschiedene, dem Fachmann bekannte Ausbildungen aufweisen können. Sie dienen dazu, die die Wärmeleitung zwischen den Wärmeaustauschpassagen zu erhöhen und die Fluide gleichmäßig über die Wärmeaustauschpassagen zu verteilen. Zudem erhöhen sie die mechanische Festigkeit des Wärmetauscherblocks.

Die vorliegende Erfindung bezieht sich auch auf ein Verfahren zur Herstellung eines Plattenwärmetauschers mit zumindest zwei Wärmetauscherblöcken, wobei jeder Wärmetauscherblock mehrere parallel zueinander angeordnete Bleche aufweist, die eine Vielzahl von Wärmeaustauschpassagen für am Wärmetausch beteiligte Fluide bilden, wobei die Wärmetauscherblöcke über Verbindungsmittel miteinander verbunden werden. Erfindungsgemäß wird in den Zwischenraum zwischen gegenüberliegenden Außenflächen benachbarten Wärmetauscherblöcke ein flüssiger, aushärtbarer Metallschaum eingebracht oder in dem Zwischenraum ausgebildet.

Vorzugsweise wird der Metallschaum nach dem Verbinden der Wärmetauscherblöcke über die Verbindungsmittel in den Zwischenraum eingebracht oder in dem Zwischenraum ausgebildet. Anschließend an das Einbringen oder Ausbilden des Metallschaums werden die Wärmetauscherblöcke vorzugsweise mit Headern zum Verteilen oder Abführen der wärmeaustauschenden Fluide versehen, wobei auf benachbarte Wärmetauscherblöcke vorzugsweise jeweils zumindest ein gemeinsamer Header aufgebracht wird.

Mit der vorliegenden Erfindung können auch bestehende Plattenwärmetauscher nachgerüstet werden. Demnach wird ein Verfahren zur Nachrüstung eines Plattenwärmetauschers aufweisend zumindest zwei Wärmetauscherblöcke bereitgestellt, bei welchem jeder Wärmetauscherblock mehrere parallel zueinander angeordnete Bleche aufweist, die eine Vielzahl von Wärmeaustauschpassagen für am Wärmetausch beteiligte Fluide bilden, wobei die Wärmetauscherblöcke über Verbindungsmittel, wie beispielsweise vorstehend beschriebene randbündig verschweißte Leisten, verbunden sind und zumindest einen gemeinsamen Header aufweisen zum Verteilen eines wärmeaustauschenden Fluids auf beide Wärmetauscherblöcke oder Abführen eines wärmeaustauschenden Fluids aus beiden Wärmetauscherblöcken. Erfindungsgemäß wird in den zwischen Außenflächen benachbarter Wärmetauscherblöcke vorhandenen Zwischenraum, der bisher in der Regel mit Luft gefüllt ist, ein flüssiger, aushärtbarer Metallschaum eingebracht oder in dem Zwischenraum ausgebildet.

Bei den beschriebenen erfindungsgemäßen Verfahren kann das Einbringen des flüssigen Metallschaums durch einen oder mehrere der folgenden Vorgänge erfolgen: Einsprühen, Einspritzen oder Einsaugen.

Eine bevorzugte Ausführungsform der erfindungsgemäßen Verfahren sieht vor, den flüssigen Metallschaum mithilfe zumindest einer Spritz- oder Sprühvorrichtung von zumindest einer Seite der Wärmetauscherblöcke in den Zwischenraum einzubringen und gleichzeitig auf zumindest einer anderen, vorzugsweise gegenüberliegenden Seite der Wärmetauscherblöcke den Metallschaum anzusaugen. Damit besteht die Möglichkeit, den Zwischenraum auch bei kleinen Zugangsöffnungen im Leistenrahmen vollständig mit Metallschaum zu versehen.

Zwischen die zu verbindenden Außenflächen der Wärmetauscherblöcke können auch ein oder mehrere Ausgangsstoffe eingebracht werden, der oder die durch Vermischen und/oder durch Änderung von Umgebungsbedingungen, vorzugsweise von Druck und/oder Temperatur, einen flüssigen, aushärtbaren Metallschaum bilden. Vorzugweise liegen die Ausgangsstoffe in Form eines Pulvers vor, das bei Überschreiten oder Unterschreiten einer bestimmten Temperatur und/oder eines bestimmten Druckes einen flüssigen, aushärtbaren Metallschaum bildet.

Bei einem Plattenwärmetauscher gemäß der vorliegenden Erfindung wird die mechanische und thermische Verbindung zwischen zwei benachbarten Wärmetauscherblöcken deutlich gegenüber dem Stand der Technik verbessert. Der gesamte, aus mehreren Wärmetauscherblöcken bestehende Plattenwärmetauscherblock ist ein deutlich starreres und mechanisch stabileres Gebilde, als ein Plattenwärmetauscher nach dem Stand der Technik. Zusätzlich weist ein erfindungsgemäßer Plattenwärmetauscher einen deutlich besseren Temperaturausgleich zwischen zwei benachbarten Wärmetauscherblöcken auf. Im Rahmen der vorliegenden Erfindung können Plattenwärmetauscher bereitgestellt werden, die zwei oder mehr als zwei, beispielsweise drei oder vier Wärmetauscherblöcke umfassen. Da die mechanische Festigkeit der Verbindung zwischen den einzelnen Wärmetauscherblöcken gegenüber dem Stand der Technik erhöht ist, können auch Plattenwärmetauscher realisiert werden, die aus einer größeren Anzahl an Blöcken bestehen, als bisher üblich war und realisierbar erschien.

Der erfindungsgemäße Plattenwärmetauscher kann besonders vorteilhaft für Verfahren eingesetzt werden, die einen besonders intensiven Wärmekontakt zwischen den Außenflächen benachbarter Wärmetauscherblöcke erfordern. Dies ist beispielsweise der Fall bei steilen Temperaturgradienten, starken Änderungen im Temperaturgradienten oder bei Ungleichverteilungen der am Wärmeaustausch teilnehmenden Fluide (Fehlverteilung oder Maldistribution). Derartige Zustände können oft bei bestimmten Verdampfungsvorgängen von zweiphasigen Gemischen oder Reinstoffen, bei asymmetrischer Passagenanordnung, nicht spezifizierten Betriebszuständen, Abschalt- oder Anfahrvorgängen auftreten.

Im Folgenden soll die Erfindung anhand des in den Figuren 2 bis 4 dargestellten Ausführungsbeispiels der Erfindung näher erläutert werden.

Es zeigt:
- Fig. 2: eine perspektivische Ansicht zweier gemäß der vorliegenden Erfindung miteinander verbundener Wärmetauscherblöcke;
- Fig. 3: eine Querschnitt durch die Anordnung von Wärmetauscherblöcken nach Fig. 2 im Verbindungsbereich der beiden Wärmetauscherblöcke;
- Fig. 4: einen Plattenwärmetauscher mit den in Fig. 2 und 3 dargestellten Wärmetauscherblöcken.

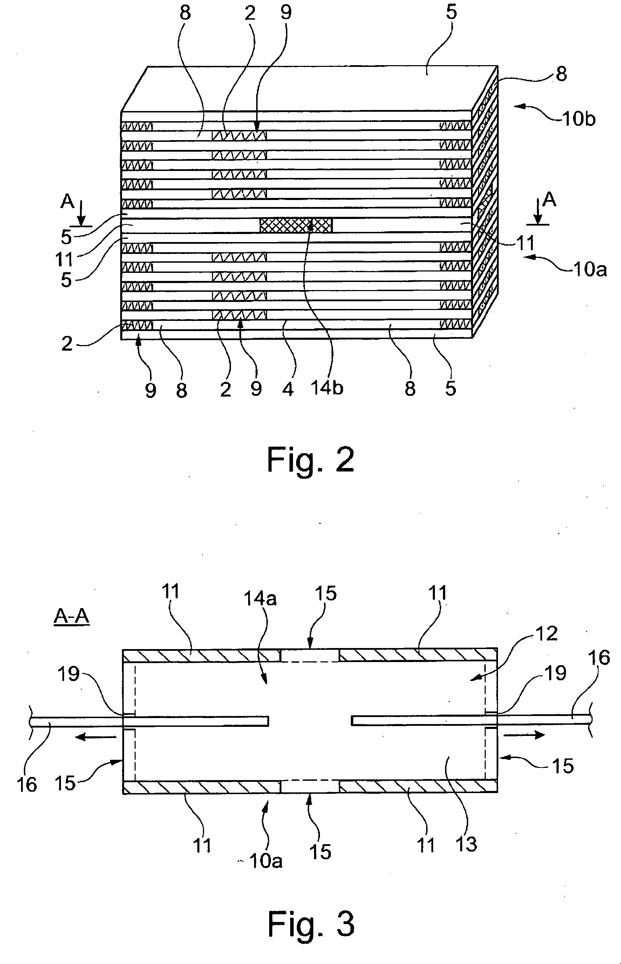

Fig. 2 zeigt zwei Wärmetauscherblöcke 10a und 10b. Die Wärmetauscherblöcke umfassen wie der in Fig. 1 dargestellte Block 10 eine Vielzahl von ebenen Blechen 4, im Weiteren auch als Trennbleche 4 bezeichnet, die in einem Stapel parallel und mit Abstand zueinander angeordnet sind. Auf den Trennblechen 4 sind jeweils bündig an deren Außenkanten Blechstreifen 8 angeordnet, die den Abstand zwischen den Trennblechen 4 festlegen und im Weiteren auch als Sidebars 8 bezeichnet werden. Durch diesen Aufbau sind zwischen den Trennblechen 4 eine Vielzahl von Wärmeaustauschpassagen 1 gebildet, die für einen indirekten Wärmetausch von zwei oder mehr Fluiden zur Verfügung stehen. Durch die Sidebars 8 sind die Wärmeaustauschpassagen 1 nach außen abgeschlossen.

Innerhalb der Wärmeaustauschpassagen 1 sind gewellte Bleche 3, sogenannte Fins 3, angeordnet. Diese sind in Fig. 3 nicht ersichtlich, da sie sich innerhalb der Wärmeaustauschblöcke 10a und 10b befinden. Es wird daher auf Fig. 1 verwiesen, die im Aufriss des Wärmeaustauschblockes 10 Fins 3 zeigen. An Ein- und Austrittsöffnungen 9 der Wärmeaustauscherpassagen 1 befinden sich sogenannte Verteilerlamellen bzw. Verteilerfins 2, die für eine gleichmäßige Verteilung der Fluide über die Strömungsquerschnitte der einzelnen Wärmeaustauschpassagen 1 sorgen. Die beiden Wärmetauscherblöcke 10a und 10b sind jeweils - in der dargestellten Ansicht - nach oben und unten durch Deckbleche 5 nach außen begrenzt. Die Deckbleche 5 weisen in der Regel eine größere Materialdicke auf als die innerhalb der Wärmetauscherblöcke 10a und 10b befindlichen Trennbleche 4. Als Material für die genannten Bauteile der Wärmetauscherblöcke 10a und 10b wird eine Aluminiumlegierung verwendet, beispielsweise Aluminiumlegierung 3003 oder 5083. Die Wärmetauscherblöcke 10a und 10b können jedoch auch aus Edelstahl gefertigt werden.

Zur Herstellung der Wärmetauscherblöcke 10a und 10b werden die lotplattierten Trennbleche 4, die Fins 3, die Verteilerfins 2 und die Sidebars 8, zunächst abwechselnd aufeinander gestapelt. Anschließend wird die Anordnung in einem Lötofen hartgelötet. Nach dem Löten sind alle genannten Bauteile fest miteinander verbunden und bilden somit kompakte quaderförmige Wärmetauscherblöcke 10a und 10 b. Die beiden Wärmetauscherblöcke 10a und 10b werden getrennt voneinander gelötet. Sie besitzen beide Abmessungen, die für einen üblichen Lötofeninnenraum maximale Abmessungen darstellen. Falls für bestimmte Anlagen und Prozesse größere Wärmeaustauschflächen benötigt werden als ein Wärmetauscherblock maximal möglicher Lötofengröße zur Verfügung stellen kann, werden gemäß der vorliegenden Erfindung zwei oder mehr Wärmetauscherblöcke miteinander verbunden.

Im Folgenden wird neben Fig. 2 auch auf Fig. 3 Bezug genommen.

Nach der separaten Fertigung der Wärmetauscherblöcke 10a und 10b werden auf das Deckblech 5 einer der Wärmetauscherblöcke, beispielsweise zuerst des Wärmetauscherblocks 10a, entlang der Kanten des Deckbleches 5 metallische Verbindungsleisten 11 aufgeschweißt, die bündig mit den Kanten des Deckblechs 5 abschließen. Die Verbindungsleisten 11 weisen in der Regel in etwa die gleiche Materialdicke auf wie die innerhalb der Wärmetauscherblöcke 10a und 10b verwendeten Blechstreifen bzw. Sidebars 8.

Der Wärmetauscherblock 10b, der mit dem Wärmetauscherblock 10a verbunden werden soll, wird mit seinem Deckblech 5 auf die Verbindungsleisten 11 des Wärmetauscherblocks 10a aufgelegt. Dabei wird der Wärmetauscherblock 10b exakt fluchtend zu dem Wärmetauscherblock 10a angeordnet. Dies ist für die nachfolgende Aufbringung von gemeinsamen Headern auf die beiden Wärmetauscherblöcke 10a und 10b von Bedeutung.

Anschließend werden die Verbindungsleisten 11 entlang der Kanten des Deckbleches 5 mit dem Wärmetauscherblock 10b verschweißt. Auf diese Weise sind die beiden Blöcke 10a und 10 b fest miteinander verbunden. Die Anordnung aus beiden Wärmetauscherblöcken 10a und 10b weist eine größere Stapelhöhe auf als die einzelnen Wärmetauscherblöcke selbst, welche damit die Größe und Geometrie des Lötofens übersteigt. Auf diese Weise können beliebig viele Wärmetauscherblöcke miteinander zu einer beliebig großen Wärmetauscherblockanordnung mit erhöhter Wärmeaustauschfläche verbunden werden.

Zwischen den Deckblechen 5 der miteinander verschweißten Wärmetauscherblöcke 10a und 10b ist ein Zwischenraum 12 gebildet, der nun nachfolgend mit einem Metallschaum 13 gefüllt wird. Der Metallschaum 13 ist aus Aluminium oder einer Aluminiumlegierung gebildet.

Nachfolgend werden verschiedene Möglichkeiten aufgelistet, auf welche Art der Metallschaum in den Zwischenraum 12 eingebracht werden kann, die jeweils einzeln oder in verschiedensten Kombinationen angewandt werden können:
- Einspritzen des flüssigen Metallschaumes an ein oder mehreren Stellen mit einer Spritzeinrichtung;
- Einsprühen des flüssigen Metallschaumes an ein oder mehreren Stellen mit einer Sprüheinrichtung;
- Einbringen von einem oder mehreren festen oder flüssigen Ausgangsstoffen beispielsweise in Pulverform in den Zwischenraum, die bei Über- oder Unterschreiten eines bestimmten Druckes und/oder einer bestimmten Temperatur einen Metallschaum ausbilden;
- Einspritzen oder Einsprühen des flüssigen Metallschaumes an ein oder mehreren Stellen und Absaugen des flüssigen Metallschaumes an ein oder mehreren, vorzugsweise gegenüberliegenden, anderen Stellen;

In der vorliegenden Ausführungsform werden von zwei gegenüberliegenden Seiten der Wärmetauscherblöcke 10a und 10b, durch Öffnungen 15, die zwischen den Metallleisten 15 zum Zwischenraum 12 freibleiben, zwei Sprüheinrichtungen 16 in den Zwischenraum 12 eingeführt. Diese werden während des Einsprühens des flüssigen Metallschaums nach und nach in Pfeilrichtung aus dem Zwischenraum gezogen. Hierdurch wird der flüssige Metallschaum 13 gleichmäßig in dem Zwischenraum 12 verteilt. Nach dem Aushärten des Metallschaumes 13 wird über die Öffnungen 15 aus dem Zwischenraum 12 ausgetretener Metallschaum von der Wärmetauscherblockanordnung abgetrennt.

Wie aus Fig. 3 zu ersehen, füllt der erhärtete bzw. erstarrte Metallschaum 13 den gesamten Zwischenraum 12 zwischen den gegenüberliegenden Außenflächen 14a und 14b der beiden Wärmetauscherblöcke 10a und 10b aus. Damit ist eine flächige Verbindung zwischen den Außenflächen 14a und 14b der gegenüberliegenden Deckbleche 5 geschaffen. Der Metallschaum 13 bildet eine Wärmebrücke wodurch ein thermisch leitender Kontakt zwischen den gegenüberliegenden Deckblechen 5 der Wärmetauscherblöcke 10a und 10b gebildet ist. Durch die thermisch leitende Verbindung ist ein über die gesamte Deckblechfläche sich erstreckender wärmeleitender Kontakt zwischen den Wärmetauscherblöcken 10a und 10b geschaffen. Temperaturunterschiede zwischen den Blöcken 10a und 10b können somit abgebaut werden, wodurch temperaturinduzierte Spannungen vermindert werden.

Zudem sind die beiden Wärmetauscherblöcke 10a und 10b durch den Metallschaum 13 vollflächig kraftschlüssig miteinander verbunden, wodurch die mechanische Festigkeit der Wärmetauscherblockverbindung gegenüber einer bisher nur am Rand über die Metallleisten 11 bestehenden Verbindung verbessert ist.

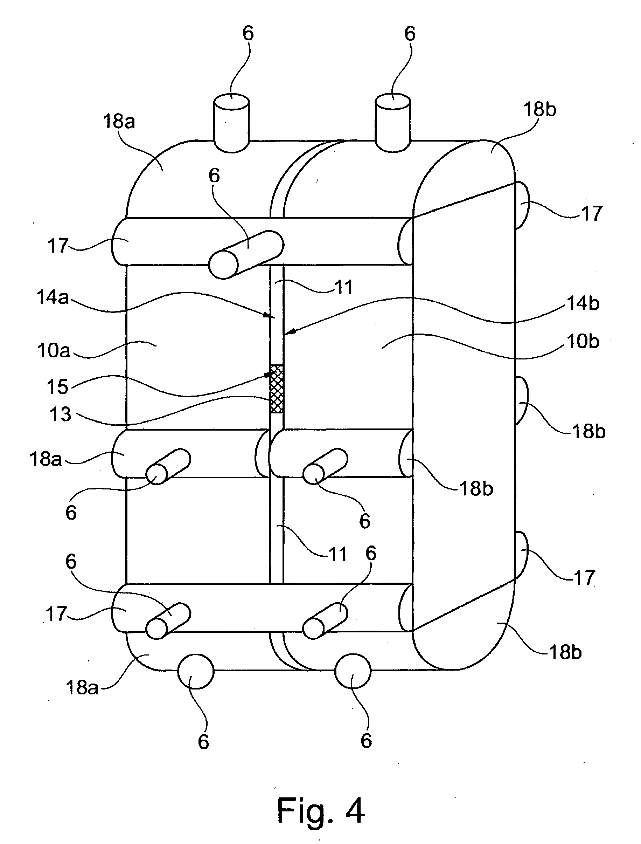

Bei der vorliegenden Ausführungsform sind die beiden Blöcke 10a und 10b über vier Verbindungsleisten 11, miteinander verschweißt. Die Anzahl und Anordnung der Verbindungsleisten 11 kann von der in den Fig. 2 und 3 dargestellten Ausführungsform abweichen. Eine nahezu umlaufend geschlossene Anbringung von Verbindungsleisten 11 ist möglich. Zur Einbringung des flüssigen Metallschaumes oder von Ausgangsstoffen zu dessen Bildung ist es jedoch notwendig, dass zumindest eine Öffnung 15 zum Zwischenraum 12 freibleibt. Die Verbindungsleisten werden in der Regel dort benötigt, wo gemeinsame Header für beide Blöcke 10a und 10b, wie nachfolgend in Fig. 4 dargestellt, vorgesehen sind, um im Verbindungsbereich beider Blöcke eine fluiddichte Abdichtung der Header zum Zwischenraum 12 zu gewährleisten.

Wie in Fig. 4 dargestellt, werden nach dem Verbinden der beiden Wärmetauscherblöcke 10a und 10b gemeinsame Header 17, separate Header 18a und 18b mit Stutzen 6 auf die Wärmetauscherblöcke 10a und 10b durch Schweißen aufgebracht. Diese dienen zum Verteilen bzw. Sammeln der am Wärmeaustausch beteiligten Fluide.

Auch ein wie in Fig. 4 dargestellter bereits abschließend gefertigter und ggf. in Betrieb genommener Plattenwärmetauscher kann mit einer Metallschaumeinlage zum Verbinden der Wärmetauscherblöcke 10a und 10b nachgerüstet werden. Falls keine Öffnung 15 zum Zwischenraum 12 vorhanden ist, da beispielsweise die Verbindungsleisten 11 einen umlaufend geschlossenen Rahmen bilden (s. Fig. 3 in unterbrochenen Linien dargestellt), besteht die Möglichkeit ein oder mehrere Bohrungen 19 in die Verbindungsleisten 11 einzubringen. Durch diese können dann flüssiger Metallschaum oder entsprechende Ausgangsstoffe in den Zwischenraum eingebracht werden. Die Bohrungen werden dann anschließend, falls erforderlich, wieder fluiddicht verschlossen, beispielsweise durch Schweißen.

**Bezugszeichenliste**

| | |
|---|---|
| Wärmeaustauschpassage | 1 |
| Verteilerfin | 2 |
| Lamelle, Fin | 3 |
| Trennblech | 4 |
| Deckblech | 5 |
| Stutzen | 6 |
| Sammler, Header | 7 |
| Sidebar | 8 |
| Ein- oder Austrittsöffnung | 9 |
| Wärmetauscherblock | 10, 10a, 10b |
| Verbindungsleiste | 11 |
| Zwischenraum | 12 |
| Metallschaum | 13 |
| Außenfläche | 14a, 14b |
| Öffnung zum Zwischenraum 12 | 15 |
| Sprüheinrichtung | 16 |
| Gemeinsame Header | 17 |
| Separate Header | 18a, 18b |
| Bohrung | 19 |

## Patentansprüche

1. Plattenwärmetauscher mit zumindest zwei Wärmetauscherblöcken (10a, 10b), wobei jeder Wärmetauscherblock (10a, 10b) mehrere parallel zueinander angeordnete Bleche (4) aufweist, die eine Vielzahl von Wärmeaustauschpassagen (1) für am Wärmetausch beteiligte Fluide bilden, wobei die Wärmetauscherblöcke (10a, 10b) über Verbindungsmittel (11) miteinander verbunden sind und zumindest einen gemeinsamen Header (17) zum Verteilen eines wärmeaustauschenden Fluids auf beide Wärmetauscherblöcke (10a, 10b) oder zum Abführen eines wärmeaustauschenden Fluids aus beiden Wärmetauscherblöcken (10a, 10b) aufweisen, **dadurch gekennzeichnet, dass** sich in einem zwischen gegenüberliegenden Außenflächen (14a, 14b) vorhandenen Zwischenraum (12) benachbarter Wärmetauscherblöcke (10a, 10b) Metallschaum (13) befindet, der die Außenflächen (14a, 14b) miteinander verbindet.

2. Plattenwärmetauscher nach einem der vorangehenden Ansprüche, **dadurch gekennzeichnet, dass** der Metallschaum (13) aus Aluminium oder einer Aluminiumlegierung gebildet ist.

3. Plattenwärmetauscher nach einem der vorangehenden Ansprüche, **dadurch gekennzeichnet, dass** der Metallschaum (13) bis in das Zentrum der gegenüberliegenden Außenflächen (14a, 14b) der Wärmetauscherblöcke (10a, 10b) reicht.

4. Plattenwärmetauscher nach einem der vorangehenden Ansprüche, **dadurch gekennzeichnet, dass** der Metallschaum (13) den Zwischenraum (12) zwischen den gegenüberliegenden Außenflächen (14a, 14b) der Wärmetauscherblöcke in etwa vollständig ausfüllt.

5. Plattenwärmetauscher nach einem der vorangehenden Ansprüche, **dadurch gekennzeichnet, dass** die Verbindungsmittel (11) durch Leisten (11) gebildet sind, die jeweils auf die gegenüberliegende Außenflächen (14a, 14b) benachbarter Wärmetauscherblöcke (10a, 10b), insbesondere durch Schweißen, aufgebracht sind.

6. Plattenwärmetauscher nach einem der vorangehenden Ansprüche, **dadurch gekennzeichnet, dass** in den Wärmeaustauschpassagen (1) der Wärmetaustauscherblöcke (10a, 10b) Mittel (3) zur Unterteilung der Wärmeaustauschpassagen (1) in eine Vielzahl von Kanälen, insbesondere gewellte Bleche (3), angeordnet sind.

7. Verfahren zur Herstellung eines Plattenwärmetauschers mit zumindest zwei Wärmetauscherblöcken (10a, 10b), wobei jeder Wärmetauscherblock (10a, 10b) mehrere parallel zueinander angeordnete Bleche (4) aufweist, die eine Vielzahl von Wärmeaustauschpassagen (1) für am Wärmetausch beteiligte Fluide bilden, wobei die Wärmetauscherblöcke (10a, 10b) über Verbindungsmittel (11) miteinander verbunden werden, **dadurch gekennzeichnet, dass** in einem Zwischenraum (12) zwischen gegenüberliegenden Außenflächen (14a, 14b) benachbarten Wärmetauscherblöcke (10a, 10b) ein flüssiger, aushärtbarer Metallschaum (13) eingebracht oder in dem Zwischenraum (12) ausgebildet wird.

8. Verfahren nach Anspruch 7, **dadurch gekennzeichnet, dass** der Metallschaum (13) nach dem Verbinden der Wärmetauscherblöcke (10a, 10b) über die Verbindungsmittel (11) in den Zwischenraum (12) eingebracht oder in dem Zwischenraum (12) ausgebildet wird.

9. Verfahren nach Anspruch 7 oder 8, **dadurch gekennzeichnet, dass** nach dem Einbringen oder Ausbilden des Metallschaums (13) die Wärmetauscherblöcke (10a, 10b) mit Header (17, 18a, 18b) zum Verteilen und Sammeln der wärmeaustauschenden Fluide auf bzw. aus jeweils einem Teil der Wärmeaustauschpassagen (1) versehen werden, wobei auf benachbarte Wärmetauscherblöcke (10a, 10b) jeweils zumindest ein gemeinsamer Header (17) aufgebracht wird zum Verteilen eines wärmeaustauschenden Fluids auf die benachbarten Wärmetauscherblöcke (10a, 10b) oder Abführen eines wärmeaustauschenden Fluids aus den benachbarten Wärmetauscherblöcken (10a, 10b).

10. Verfahren zur Nachrüstung eines Plattenwärmetauschers aufweisend zumindest zwei Wärmetauscherblöcke (10a, 10b), wobei jeder Wärmetauscherblock (10a, 10b) mehrere parallel zueinander angeordnete Bleche (4) aufweist, die eine Vielzahl von Wärmeaustauschpassagen (1) für am Wärmetausch beteiligte Fluide bilden, wobei die Wärmetauscherblöcke (10a, 10b) über Verbindungsmittel (11) verbunden sind und zumindest einen gemeinsamen Header (17) aufweisen zum Verteilen eines wärmeaustauschenden Fluids auf beide Wärmetauscherblöcke (10a, 10b) oder Abführen oder eines wärmeaustauschenden Fluids aus beiden Wärmetauscherblöcken (10a, 10b), **dadurch gekennzeichnet, dass** in einem Zwischenraum (12) zwischen gegenübertiegenden Außenflächen (14a, 14b) benachbarter Wärmetauscherblöcke (10a, 10b) ein flüssiger, aushärtbarer Metallschaum (13) eingebracht oder in dem Zwischenraum (12) ausgebildet wird.

11. Verfahren nach einem der Ansprüche 7 bis 10, **dadurch gekennzeichnet, dass** das Einbringen des flüssigen Metallschaumes (13) erfolgt durch einen oder mehrere der folgenden Vorgänge: Einsprühen, Einspritzen oder Einsaugen.

12. Verfahren nach einem der Ansprüche 7 bis 11, **dadurch gekennzeichnet**, das der flüssige Metallschaum (13) mithilfe zumindest einer Spritz- oder Sprühvorrichtung von zumindest einer Seite der Wärmetauscherblöcke (10a, 10b) in den Zwischenraum (12) eingebracht und gleichzeitig auf zumindest einer anderen, insbesondere gegenüberliegenden, Seite der Wärmetauscherblöcke (10a, 10b) angesaugt wird.

13. Verfahren nach einem Ansprüche 7 bis 11, **dadurch gekennzeichnet, dass** zwischen den zu verbindenden Außenflächen (14a, 14b) der Wärmetauscherblöcke (10a, 10b) ein oder mehrere Ausgangsstoffe eingebracht werden, der oder die durch Vermischen und/oder durch Änderung von Umgebungsbedingungen, insbesondere von Druck und/oder Temperatur, den flüssigen, aushärtbaren Metallschaum (13) bilden.

14. Verfahren nach Anspruch 13, **dadurch gekennzeichnet, dass** der oder die Ausgangsstoffe in Form eines Pulvers vorliegen, das bei Überschreiten oder Unterschreiten einer bestimmten Temperatur und/oder eines bestimmten Druckes den flüssigen, aushärtbaren Metallschaum (13) bildet.

## Claims

1. Plate heat exchanger comprising at least two heat exchanger blocks (10a, 10b), each heat exchanger block (10a, 10b) having multiple sheets (4) that are arranged parallel to one another and form a plurality of heat-exchange passages (1) for fluids involved in the heat exchange, the heat exchanger blocks (10a, 10b) being connected to one another by way of connecting means (11) and having at least one common header (17) for distributing a heat-exchanging fluid to the two heat exchanger blocks (10a, 10b) or for draining a heat-exchanging fluid from the two heat exchanger blocks (10a, 10b), **characterized in that** in an interspace (12) of adjacent heat exchanger blocks (10a, 10b) that is present between opposing outer surfaces (14a, 14b) there is metal foam (13), which connects the outer surfaces (14a, 14b) to one another.

2. Plate heat exchanger according to one of the preceding claims, **characterized in that** the metal foam (13) is formed from aluminium or an aluminium alloy.

3. Plate heat exchanger according to one of the preceding claims, **characterized in that** the metal foam (13) reaches into the centre of the opposing outer surfaces (14a, 14b) of the heat exchanger blocks (10a, 10b).

4. Plate heat exchanger according to one of the preceding claims, **characterized in that** the metal foam (13) fills the interspace (12) between the opposing outer surfaces (14a, 14b) of the heat exchanger blocks more or less completely.

5. Plate heat exchanger according to one of the preceding claims, **characterized in that** the connecting means (11) are formed by strips (11) that are respectively applied to the opposing outer surfaces (14a, 14b) of adjacent heat exchanger blocks (10a, 10b), in particular by welding.

6. Plate heat exchanger according to one of the preceding claims, **characterized in that** means (3) for subdividing the heat-exchange passages (1) into a plurality of channels, in particular corrugated sheets (3), are arranged in the heat-exchange passages (1) of the heat exchanger blocks (10a, 10b).

7. Method for producing a plate heat exchanger comprising at least two heat exchanger blocks (10a, 10b), each heat exchanger block (10a, 10b) having multiple sheets (4) that are arranged parallel to one another and form a plurality of heat-exchange passages (1) for fluids involved in the heat exchange, the heat exchanger blocks (10a, 10b) being connected to one another by way of connecting means (11), **characterized in that** a liquid, hardenable metal foam (13) is introduced into an interspace (12) between opposing outer surfaces (14a, 14b) of adjacent heat exchanger blocks (10a, 10b) or is formed in the interspace (12).

8. Method according to Claim 7, **characterized in that** the metal foam (13) is introduced into the interspace (12) or formed in the interspace (12) after the connecting of the heat exchanger blocks (10a, 10b) by way of the connecting means (11).

9. Method according to Claim 7 or 8, **characterized in that**, after introducing or forming the metal foam (13), the heat exchanger blocks (10a, 10b) are provided with headers (17, 18a, 18b) for distributing and collecting heat-exchanging fluids to or from one part of the heat-exchange passages (1) at a time, at least one common header (17) being respectively applied to adjacent heat exchanger blocks (10a, 10b) for distributing a heat-exchanging fluid to the adjacent heat exchanger blocks (10a, 10b) or for draining a heat-exchanging fluid from the adjacent heat exchanger blocks (10a, 10b).

10. Method for retrofitting a plate heat exchanger having at least two heat exchanger blocks (10a, 10b), each heat exchanger block (10a, 10b) having multiple sheets (4) that are arranged parallel to one another and form a plurality of heat-exchange passages (1) for fluids involved in the heat exchange, the heat exchanger blocks (10a, 10b) being connected by way of connecting means (11) and having at least one common header (17) for distributing a heat-exchanging fluid to the two heat exchanger blocks (10a, 10b) or for draining a heat-exchanging fluid from the two heat exchanger blocks (10a, 10b), **characterized in that** a liquid, hardenable metal foam (13) is introduced into an interspace (12) between opposing outer surfaces (14a, 14b) of adjacent heat exchanger blocks (10a, 10b) or is formed in the interspace (12).

11. Method according to one of Claims 7 to 10, **characterized in that** introduction of the liquid metal foam (13) takes place by one or more of the following processes: spraying-in, injection, or suction.

12. Method according to one of Claims 7 to 11, **characterized in that** the liquid metal foam (13) is introduced into the interspace (12) using at least one injecting or spraying device from at least one side of the heat exchanger blocks (10a, 10b), and at the same time is sucked onto at least one other, in particular opposite, side of the heat exchanger blocks (10a, 10b).

13. Method according to one of Claims 7 to 11, **characterized in that** one or more starting substances that form(s) the liquid, hardenable metal foam (13) by mixing and/or by changing ambient conditions, in particular pressure and/or temperature, is/are introduced between the outer surfaces (14a, 14b) to be connected of the heat exchanger blocks (10a, 10b).

14. Method according to Claim 13, **characterized in that** the starting substance or substances is/are in the form of a powder that forms the liquid, hardenable metal foam (13) when the temperature and/or pressure exceeds or falls below a certain level.

## Revendications

1. Echangeur de chaleur à plaques doté d'au moins deux blocs d'échangeur de chaleur (10a, 10b), dans lequel chaque bloc d'échangeur de chaleur (10a, 10b) présente plusieurs tôles (4) disposées parallèlement les unes aux autres, qui forment une multiplicité de passages d'échange de chaleur (1) pour des fluides participant à l'échange de chaleur, dans lequel les blocs d'échangeur de chaleur (10a, 10b) sont reliés l'un à l'autre par des moyens de liaison (11) et présentent au moins un collecteur commun (17) pour distribuer un fluide d'échange de chaleur sur les deux blocs d'échangeur de chaleur (10a, 10b) ou pour évacuer un fluide d'échange de chaleur à partir des deux blocs d'échangeur de chaleur (10a, 10b), **caractérisé en ce qu'**il se trouve, dans un espace intermédiaire (12) existant entre des faces extérieures opposées (14a, 14b) de blocs d'échangeur de chaleur voisins (10a, 10b), une mousse métallique (13), qui relie l'une à l'autre les faces extérieures (14a, 14b).

2. Echangeur de chaleur à plaques selon la revendication précédente, **caractérisé en ce que** la mousse métallique (13) est formée d'aluminium ou d'un alliage d'aluminium.

3. Echangeur de chaleur à plaques selon l'une quelconque des revendications précédentes, **caractérisé en ce que** la mousse métallique (13) arrive jusqu'au centre des faces extérieures opposées (14a, 14b) des blocs d'échangeur de chaleur (10a, 10b).

4. Echangeur de chaleur à plaques selon l'une quelconque des revendications précédentes, **caractérisé en ce que** la mousse métallique (13) remplit environ entièrement l'espace intermédiaire (12) entre les faces extérieures opposées (14a, 14b) des blocs d'échangeur de chaleur.

5. Echangeur de chaleur à plaques selon l'une quelconque des revendications précédentes, **caractérisé en ce que** les moyens de liaison (11) sont formés par des lattes (11), qui sont respectivement posées, en particulier par soudage, sur les faces extérieures opposées (14a, 14b) de blocs d'échangeur de chaleur voisins (10a, 10b).

6. Echangeur de chaleur à plaques selon l'une quelconque des revendications précédentes, **caractérisé en ce que** des moyens (3) sont disposés dans les passages d'échange de chaleur (1) des blocs d'échangeur de chaleur (10a, 10b) pour diviser les passages d'échange de chaleur (1) en une multiplicité de canaux, en particulier des tôles ondulées (3).

7. Procédé de fabrication d'un échangeur de chaleur à plaques avec au moins deux blocs d'échangeur de chaleur (10a, 10b), dans lequel chaque bloc d'échangeur de chaleur (10a, 10b) présente plusieurs tôles (4) disposées parallèlement les unes aux autres, qui forment une multiplicité de passages d'échange de chaleur (1) pour des fluides participant à l'échange de chaleur, dans lequel les blocs d'échangeur de chaleur (10a, 10b) sont reliés l'un à l'autre par des moyens de liaison (11), **caractérisé en ce que** l'on introduit une mousse métallique liquide durcissable (13) dans un espace intermédiaire (12) entre des faces extérieures opposées (14a, 14b) de blocs d'échangeur de chaleur voisins (10a, 10b) ou on la forme dans l'espace intermédiaire (12).

8. Procédé selon la revendication 7, **caractérisé en ce que** l'on introduit la mousse métallique (13) dans l'espace intermédiaire (12) ou on la forme dans l'espace intermédiaire (12) après la liaison des blocs d'échangeur de chaleur (10a, 10b) avec les moyens de liaison (11).

9. Procédé selon la revendication 7 ou 8, **caractérisé en ce qu'**après l'introduction ou la formation de la mousse métallique (13), on munit les blocs d'échangeur de chaleur (10a, 10b) d'un collecteur (17, 18a, 18b) pour distribuer et récolter les fluides d'échange de chaleur sur ou à partir d'au moins une partie des passages d'échange de chaleur (1), dans lequel on pose respectivement au moins un collecteur commun (17) sur des blocs d'échangeur de chaleur voisins (10a, 10b) pour distribuer un fluide d'échange de chaleur sur les blocs d'échangeur de chaleur voisins (10a, 10b) ou pour évacuer un fluide d'échange de chaleur hors des blocs d'échangeur de chaleur voisins (10a, 10b).

10. Procédé de rééquipement d'un échangeur de chaleur à plaques présentant au moins deux blocs d'échangeur de chaleur (10a, 10b), dans lequel chaque bloc d'échangeur de chaleur (10a, 10b) présente plusieurs tôles (4) disposées parallèlement les unes aux autres, qui forment une multiplicité de passages d'échange de chaleur (1) pour des fluides participant à l'échange de chaleur, dans lequel les blocs d'échangeur de chaleur (10a, 10b) sont reliés l'un à l'autre par des moyens de liaison (11) et présentent au moins un collecteur commun (17) pour distribuer un fluide d'échange de chaleur sur les deux blocs d'échangeur de chaleur (10a, 10b) ou pour évacuer un fluide d'échange de chaleur à partir des deux blocs d'échangeur de chaleur (10a, 10b), **caractérisé en ce que** l'on introduit une mousse métallique liquide durcissable (13) dans un espace intermédiaire (12) entre des faces extérieures opposées (14a, 14b) de blocs d'échangeur de chaleur voisins (10a, 10b) ou on la forme dans l'espace intermédiaire (12).

11. Procédé selon l'une quelconque des revendications 7 à 10, **caractérisé en ce que** l'on opère l'introduction de la mousse métallique liquide (13) par une ou plusieurs des opérations suivantes: projection, injection ou aspiration.

12. Procédé selon l'une quelconque des revendications 7 à 11, **caractérisé en ce que** l'on introduit la mousse métallique liquide (13) dans l'espace intermédiaire (12) à l'aide d'au moins un dispositif d'injection ou de projection à partir d'au moins un côté des blocs d'échangeur de chaleur (10a, 10b) et on l'aspire en même temps par au moins un autre côté, en particulier un côté opposé, des blocs d'échangeur de chaleur (10a, 10b).

13. Procédé selon l'une quelconque des revendications 7 à 11, **caractérisé en ce que** l'on introduit entre les faces extérieures (14a, 14b) à relier des blocs d'échangeur de chaleur (10a, 10b), une ou plusieurs matière(s) première(s) qui forme(nt), par mélange et/ou par modification de conditions ambiantes, en particulier de la pression et/ou de la température, la mousse métallique liquide durcissable (13).

14. Procédé selon la revendication 13, **caractérisé en ce que** la ou les matière(s) première(s) se présente(nt) sous la forme d'une poudre qui, lors du franchissement ascendant ou descendant d'une température déterminée et/ou d'une pression déterminée, forme(nt) la mousse métallique liquide durcissable (13).
